# EUROPÄISCHE PATENTSCHRIFT

(11) **EP 3 628 036 B1**
(45) Veröffentlichungstag und Bekanntmachung des Hinweises auf die Patenterteilung: **14.09.2022**
(21) Anmeldenummer: 18729551.4
(22) Anmeldetag: 26.04.2018
(51) Int. Cl.: B29C 67/20, B29B 17/00, B29B 17/04

(54) **VERFAHREN ZUR HERSTELLUNG EINES SCHAUMSTOFFKÖRPERS**
METHOD FOR PRODUCING A FOAM BODY
PROCÉDÉ PERMETTANT DE FABRIQUER UN CORPS EN MOUSSE

(30) Priorität: 02.05.2017 AT 503532017
(43) Veröffentlichungstag der Anmeldung: 01.04.2020
(73) Patentinhaber: Nowy, Florian, 1070 Wien (AT); Zorn, Alois, 1150 Wien (AT)
(72) Erfinder: NOWY, Florian, 1070 Wien (AT)
(74) Vertreter: Burger, Hannes
(86) Internationale Anmeldenummer: PCT/AT2018/060080
(87) Internationale Veröffentlichungsnummer: WO 2018/201175

(56) Entgegenhaltungen:
- DE-A1- 4 004 587
- JP-A- 2010 254 894
- US-A- 3 859 404
- US-A- 5 258 085
- US-A1- 2004 053 032
- US-A1- 2008 224 357
- US-B1- 6 607 682

## Beschreibung

Die Erfindung betrifft ein Verfahren zur Herstellung eines Schaumstoffkörpers.

Schaumstoffprodukte aus geschäumten Kunststoffen werden seit Jahrzehnten für verschiedenste Zwecke hergestellt. Der mit Abstand am häufigsten zur Herstellung von Schaumstoffen verwendete Kunststoff ist Polystyrol. Im Speziellen wird expandierter Polystyrol-Partikelschaumstoff (EPS), beispielsweise bekannt unter der Bezeichnung Styropor^{®}, für verschiedene Zwecke, wie etwa als Verpackung oder als Wärmedämmmaterial eingesetzt. Übliche Verfahren zur Herstellung solcher Schaumstoffprodukte umfassen mindestens einen Schäumungsvorgang, bei welchem ein Treibmittel beinhaltendes Kunststoffmaterial erwärmt wird, und sich aufgrund des verdampfenden Treibmittels ausdehnt. Hierbei wird eine Rohbzw. Schüttdichte des Kunststoffmaterials verringert. Anschließend kann beispielsweise eine Zwischenlagerung des geschäumten Kunststoffmaterials erfolgen. Darauf folgend wird üblicherweise ein weiteres Ausschäumen des Kunststoffes durchgeführt, bei welchem auch das entsprechende Schaumstoffprodukt ausgeformt wird.

Die auf diese Weise erzeugbaren Schaumstoffprodukte können aufgrund ihrer Eigenschaften zwar für einige Zwecke eingesetzt werden. Die möglichen Einsatzbereiche dieser Schaumstoffprodukte sind allerdings vor allem durch die unzureichenden, mechanischen Eigenschaften, beispielsweise von geschäumten EPS-Produkten, limitiert. So können derartige Schaumstoffprodukte beispielsweise nicht für Anwendungen verwendet werden, bei welchen auseichend gute mechanische Eigenschaften, wie etwa bestimmte Druck-, Zug- und/oder Biegefestigkeiten erforderlich sind.

In der Vergangenheit wurde ein Verfahren bekannt, bei welchem ein Körper aus expandiertem Schaumstoff einer Wärmebehandlung eines den Schaumstoff bildenden Kunststoffs unterzogen wird. Ein solches Verfahren ist zum Beispiel aus der WO 2006/086813 A1, EP 1 853 654 B1 und US 8,765,043 B2 offenbart. Durch die Wärmebehandlung wird ein Volumen des Körpers gegenüber dem Ausgangszustand vor der Wärmebehandlung reduziert. Das bekannte Verfahren weist jedoch noch Defizite hinsichtlich der Verfahrensführung auf. Im Speziellen kann die Volumenreduktion bzw. Schrumpfung des Ausgangskörpers nicht gut kontrolliert werden, sodass eine Formgebung für das volumenreduzierte Schaumstoffprodukt eine formgebende Nachbearbeitung erfordert. Das erhaltene Schaumstoffprodukt muss beispielsweise durch Schneiden, Fräsen, Sägen in eine gebrauchsfähige Form überführt werden. Hierdurch resultiert einerseits ein erhöhter Verfahrensaufwand, und fällt andererseits auch Abfallmaterial, beispielsweise durch Fräs- und/oder Verschnitt-Verluste und Dergleichen an. Des Weiteren können aufgrund der Verfahrensführung Schaumstoffprodukte mit verhältnismäßig großen Dichteunterschieden in verschiedenen Bereichen eines jeweiligen Schaumstoffproduktes resultieren.

Aus US 2004/0053032 A1 ist eine Methode zur Herstellung von Plastikschaumprodukten bekannt geworden. Die Methode umfasst ein Mischen von Plastikschaumpartikeln mit unterschiedlichen Volumengewichten und Verbinden dieser gemischten Plastikschaumpartikel zu einem Plastikschaumkörper. Bei der angegebenen Methode wird eine Bestimmung eines jeweiligen Volumengewichts der unterschiedlichen Plastikschaumpartikel-Fraktionen vorgeschlagen. Darauf basierend wird eine Anpassung der zum Mischen herangezogenen Mengen an unterschiedlichen Plastikschaumpartikel-Fraktionen vorgeschlagen, um ein gewünschtes Volumengewicht des Plastikschaumkörpers zu erhalten. Die US 2004/0053032 A1 offenbart keine Maßnahmen zur Zwischenverarbeitung der gemischten Plastikschaumpartikel vor dem Verbinden.

Aufgabe der vorliegenden Erfindung war es, die noch verbleibenden Nachteile des Standes der Technik zu überwinden und ein verbessertes Verfahren zur Verfügung zu stellen, mittels welchem Verfahren Schaumstoffkörper mit guten mechanischen Eigenschaften in effizienter Art und Weise, und im Wesentlichen ohne Anfallen von Abfallmaterial hergestellt werden können. Des Weiteren war es eine Aufgabe der Erfindung, einen verbesserten Schaumstoffkörper mit möglichst geringen Dichteunterschieden in allen Bereichen des Schaumstoffkörpers bereitzustellen.

Diese Aufgabe wird durch ein Verfahren gemäß den Ansprüchen 1 bis 18 gelöst.

Das Verfahren zur Herstellung eines Schaumstoffkörpers umfasst die Schritte
- Bereitstellung eines schüttfähigen Ausgangsgranulats aus expandierten Partikeln eines thermoplastischen Kunststoffs,
- Bildung eines schüttfähigen Zwischengranulats mit einer größeren Schüttdichte als jener des Ausgangsgranulats durch Volumenreduzierung der Partikeln des Ausgangsgranulats, indem das Ausgangsgranulat einer nicht schmelzenden Wärmebehandlung unterzogen wird, und
- folgend Formung des Schaumstoffkörpers durch materialschlüssiges Verbinden der volumenreduzierten Partikel des Zwischengranulats, indem das Zwischengranulat in einem Formraum eines Formwerkzeugs auf eine Temperatur größer als eine Glasübergangstemperatur des thermoplastischen Kunstoffs erhitzt wird, und anschließend der thermoplastische Kunststoff durch Erkalten verfestigt wird.

Mit dem Begriff Ausgangsgranulat wird in dieser Schrift ein Ausgangsschüttgut bezeichnet. Mit dem Begriff Zwischengranulat wird in dieser Schrift ein Zwischenschüttgut bezeichnet. Durch das angegebene Verfahren können Schaumstoffkörper guten mechanischen Eigenschaften hergestellt werden. Im Besonderen können Schaumstoffkörper mit, im Vergleich zu den Ausgangsstoffen, verbesserter Druck-, Zug- und Biegefestigkeit hergestellt werden. Die hergestellten Schaumstoffkörper können aufgrund dessen auch in Anwendungsbereichen eingesetzt werden, bei welchen erhöhte mechanische Festigkeiten erforderlich sind. Rein beispielhaft wird die Verwendung der Schaumstoffkörper als Dämmelemente für Baukonstruktionen genannt, etwa zur wärmetechnischen Entkoppelung von tragenden Bauteilen. Auch können die hergestellten Schaumstoffkörper bzw. Formkörper als konstruktive Leichtbauelemente zum Beispiel in technischen Bereichen wie etwa dem Fahrzeugbau eingesetzt werden. Als weiteres Beispiel kann eine Verwendung der Schaumstoffkörper zur Erzeugung von Auftrieb für Lasten in Flüssigkeiten genannt werden.

Durch die nicht schmelzende Wärmebehandlung werden die expandierten Partikel des Ausgangsgranulats in ihrem Volumen geschrumpft, ohne dass sich die Partikel untereinander verbinden. Der Grad der Schrumpfung kann hierbei durch Wahl der Temperatur und der Dauer der Wärmebehandlung beeinflusst werden. Vorteilhafterweise kann hierdurch eine gewünschte Schüttdichte für das Zwischengranulat gezielt beeinflusst werden. Hierdurch kann für die folgende Formung des Schaumstoffkörpers bereits ein Zwischengranulat mit einer jeweils gewünschten Schüttdichte bereitgestellt werden, sodass eine Zeitdauer für den Formungsschritt sehr kurz bemessen werden kann. Des Weiteren können hierdurch auch die gewünschten Eigenschaften des nach dem Formungsschritt resultierenden Schaumstoffkörpers, wie etwa Wärmedämmwerte, Biege- oder Druckfestigkeit, bereits gezielt beeinflusst werden.

Durch eine höhere Temperatur während der Wärmebehandlung kann eine höhere Volumenreduzierung der expandierten Partikel des Ausgangsgranulats erzielt werden, und kann ein Zwischengranulat mit größerer Schüttdichte gebildet werden, als bei niedrigeren Temperaturen während der Wärmebehandlung. Die Temperatur während der Wärmebehandlung bestimmt letztlich die maximal erreichbare Volumenreduzierung für die Partikel des Ausgangsgranulats, bzw. die maximale erreichbare Schüttdichte des Zwischengranulats. Auch kann durch eine längere Zeitdauer der nicht schmelzenden Wärmebehandlung eine Vergrößerung der Schüttdichte des Zwischengranulats erzielt werden, als durch eine vergleichsweise kürzere Zeitdauer. Durch Auswahl der Parameter Temperatur und Zeitdauer der nicht schmelzenden Wärmebehandlung kann eine Schüttdichte des Zwischengranulats vorteilhafterweise gezielt beeinflusst werden.

Vorzugsweise wird die nicht schmelzende Wärmebehandlung zur Bildung des schüttfähigen Zwischengranulats bei einer Temperatur im Bereich oder knapp oberhalb einer Glasübergangstemperatur bzw. Erweichungstemperatur des jeweiligen, thermoplastischen Kunststoffs ausgeführt. Der Begriff Glasübergangstemperatur bezieht sich in dieser Schrift auf die werkstoffabhängige untere Grenze eines Glasübergangsbereiches, ab der für einen jeweiligen, thermoplastischen Kunststoff die amorphen Teile zu Erweichen beginnen, wie dies für thermoplastische Kunststoffe an sich bekannt ist. Die Temperatur wird für die nicht schmelzende Wärmebehandlung jeweils so gewählt, dass sie unterhalb einer allfälligen Schmelztemperatur des jeweiligen thermoplastischen Kunststoffes liegt.

Durch die nicht schmelzende Wärmebehandlung werden die expandierten Partikel des Ausgangsgranulats in einen weichelastischen Zustand überführt. In diesem weichelastischen Zustand ziehen sich die dünnen Wände der expandierten Partikel des Ausgangsgranulats, ausgehend von ihrem, durch die Expansion bei der Herstellung gestreckten Zustand gleichmäßig zusammen, wodurch eine Volumenreduktion der Partikel eintritt, und das Zwischengranulat mit größerer Schüttdichte als der Schüttdichte des Ausgangsgranulats gebildet wird. Etwaig noch im Ausgangsgranulat vorhandenes Rest-Treibmittel wird im Zuge der nicht schmelzenden Wärmebehandlung verflüchtigt, sodass das schüttfähige Ausgangsgranulat einer nicht schäumenden Wärmebehandlung unterzogen wird.

Von Vorteil gegenüber dem Stand der Technik hat sich bei dem Verfahren erwiesen, dass durch die Wärmebehandlung eines Ausgangsgranulats, und durch die Bildung eines schüttfähigen Zwischengranulats als Grundlage für die folgende Formung des Schaumstoffkörpers, die Formung des Schaumstoffkörpers auf direkte Weise in dem Formwerkzeug erfolgen kann. Hierdurch können weitere, formgebende Nachbearbeitungsschritte, wie etwa Schneiden, Sägen oder Fräsen grundsätzlich erübrigt werden. In weiterer Folge kann auch ein Anfallen von Abfallmaterial, etwa durch Verschnitt, hintangehalten werden. Allfällige, geringfügige Nachbearbeitungen, wie etwa oberflächliches Schleifen etc., produzieren lediglich geringe Mengen an Abfallmaterial. Gegebenenfalls kann auch vorgesehen sein, dass Abfallmaterial aus spanabhebenden Nachbearbeitungen im Verfahren wiederverwendet wird, indem solches Abfallmaterial einem Zwischengranulat vor der Formung in dem Formwerkzeug beigemengt wird. Hierbei ist es möglich, dass solches Abfallmaterial durch die Nachbearbeitung wiederum in granulärer, schüttfägiger Form anfällt, oder zu einem schüttfähigen Granulat zerkleinert wird.

Durch die angegebenen Maßnahmen für die Formung des Schaumstoffkörpers kann ein Schaumstoffkörper bereitgestellt werden, wobei eine geometrische Form der Begrenzungsflächen des resultierenden Schaumstoffkörpers zumindest vorwiegend durch die Ausgestaltung des Formraumes vorgegeben werden kann.

Des Weiteren ist gegenüber dem Stand der Technik von Vorteil, dass aufgrund der Verfahrensführung Schaumstoffprodukte mit sehr kleinen Dichteunterschieden in verschiedenen Bereichen eines jeweiligen Schaumstoffproduktes hergestellt werden können. Zum einen hat sich herausgestellt, dass durch die Wärmebehandlung eines Ausgangsgranulats im Gegensatz zu einer Wärmebehandlung eines Ausgangskörpers, Dichteunterschiede des Ausgangsmaterials verbessert ausgeglichen werden können. Es werden also Rohdichteunterschiede der volumenreduzierten Partikel des Zwischengranulats im Vergleich zu Rohdichteunterschieden der bereitgestellten, expandierten Partikel des Ausgangsgranulats, durch die Wärmebehandlung verringert. Des Weiteren ergibt sich bei dem Verfahren die Möglichkeit, die volumenreduzierten Partikel des Zwischengranulat hinsichtlich einer jeweiligen Rohdichte aufzutrennen bzw. zu klassifizieren, und für die folgende Formung des Schaumstoffkörpers jeweils volumenreduzierte Partikel mit zumindest vorwiegend einheitlicher Rohdichte einzusetzen bzw. zu verwenden.

Insgesamt ist durch die angegebenen Maßnahmen ein einfaches Verfahren bereitgestellt, mittels welchem weit verbreitete und leicht verfügbare Ausgangswerkstoffe in ihren Eigenschaften modifiziert werden können, und Schaumstoffkörper hergestellt werden können, welche sich für neue, den Ausgangswerkstoffen nicht zugängliche Anwendungsbereiche eignen. Gegenüber dem vorbekannten Stand der Technik, bei welchem ein Körper einer Wärmebehandlung unterzogen wird, ergeben sich weitere, vorteilhafte Möglichkeiten für die weitere Verarbeitung aufgrund der Bildung des schüttfähigen Zwischengranulats durch die Wärmebehandlung.

Im Prinzip kann jedweder, expandierte thermoplastische Kunststoff für das Verfahren bereitgestellt werden. In der Praxis sind neben geschäumten Werkstoffen aus Polyethylen oder Polypropylen, hauptsächlich Polystyrol-Schaumstoffprodukte als Ausgangsmaterial erhältlich. Vernetzte, duromere Schaumstoffgegenstände können für das Verfahren nicht eingesetzt werden, da für diese Stoffe keine Volumenreduzierung durch Wärmebehandlung erzielbar ist.

Bei einer Ausführungsform des Verfahrens kann vorgesehen sein, dass zur Bereitstellung des Ausgangsgranulats Schaumstoffgegenstände aus dem thermoplastischen Kunststoff zerkleinert werden.

Hierbei kann es sich zum Beispiel um Verpackungen aus Polystyrolschaum, oder um Wärmedämmplatten aus Polystyrol handeln. Solche Ausgangsmaterialien können in einfacher Art und Weise ohne großen Aufwand zu dem Ausgangsgranulat zerkleinert werden. Zur Zerkleinerung kann hierbei im Prinzip jedwedes Zerkleinerungsmittel zur Anwendung kommen, wie zum Beispiel ein Schredder. Vorteilhafterweise können hierdurch auch verschiedenste Ausgangsgegenstände recycelt, und zu nutzbaren Schaumstoffkörpern verarbeitet werden.

Hierbei ist es durchaus möglich, dass Schaumstoffgegenstände mit unterschiedlicher Dichte zerkleinert werden.

Dies ist bei dem Verfahren durchaus möglich, da durch die nicht schmelzende Wärmebehandlung die Bildung eines Zwischengranulats mit, im Vergleich zu den expandierten Partikeln des Ausgangsgranulats, angeglichener Rohdichte der volumenreduzierten Partikel möglich ist. Des Weiteren kann auch aufgrund der schüttfähigen Form des Zwischengranulats, vor der Formung des Schaumstoffkörpers eine weitere Klassifizierung des Zwischengranulats nach Dichte erfolgen.

Bei einer zweckmäßigen Ausführungsform des Verfahrens kann vorgesehen sein, dass durch die Wärmebehandlung eine Schüttdichte des Zwischengranulats - bezogen auf eine Schüttdichte des Ausgangsgranulats vor der Wärmebehandlung - auf das 5- fache bis 40-fache vergrößert wird.

Durch Bildung eines derart verdichteten Zwischengranulats mit vergrößerter Schüttdichte, können in der Folge Schaumstoffkörper mit verbesserten, mechanischen Eigenschaften geformt werden. Die Vergrößerung der Schüttdichtedurch Volumenreduzierung der Partikel des Ausgangsgranulats, kann hierbei hauptsächlich durch Auswahl von Temperatur und Zeitdauer der nicht schmelzenden Wärmebehandlung ausgewählt werden.

Im Besonderen kann vorgesehen sein, dass durch die Wärmebehandlung eine Schüttdichte des Zwischengranulats auf einen Wert, ausgewählt aus einem Bereich von 50 kg/m³ bis 500 kg/m³ eingestellt wird.

Durch gezielte Bildung eines Zwischengranulats mit einer Schüttdichte im angegebenen Bereich, kann in dem nachfolgenden Verfahrensschritt der Formung direkt ein Schaumstoffkörper mit jeweils angepassten Eigenschaften hergestellt werden. Insbesondere eignet sich ein Zwischengranulat mit einer Schüttdichte, gewählt aus dem angegeben Bereich in besonderem Maße zur Herstellung von Schaumstoffkörpern mit verbesserten, mechanischen Eigenschaften. Beispielsweise können durch Bildung eines Zwischengranulats mit hoher Schüttdichte Schaumstoffkörper mit höheren Druck-, Zug-, oder Biegefestigkeiten hergestellt werden.

Bei einer bevorzugten Weiterbildung des Verfahrens kann vorgesehen sein, dass die Wärmebehandlung bei einer Temperatur im Bereich der Glasübergangstemperatur des thermoplastischen Kunststoffs durchgeführt wird.

Hierdurch kann eine ausreichende Mobilität der Polymerketten des thermoplastischen Kunststoffes des Ausgangsgranulats für die Volumenreduzierung während der Wärmebehandlung bereitgestellt werden. Des Weiteren kann auch eine für eine ausreichende Volumenreduktion notwendige Zeitdauer der Wärmebehandlung vorteilhafterweise begrenzt werden.

Im Besonderen kann vorgesehen sein, dass die Wärmebehandlung bei einer Temperatur, ausgewählt aus einem Bereich von 90 °C bis 120 °C, durchgeführt wird.

Hierdurch ist für die meisten, gängigen Schaumstoffprodukte aus expandierten, thermoplastischen Kunststoffen ein geeigneter Temperaturbereich für die nicht schmelzende Wärmebehandlung bereitgestellt, und können solche Schaumstoffprodukte somit vorteilhafterweise mit dem Verfahren verarbeitet bzw. recycelt werden.

Es kann aber auch vorgesehen sein, dass die Wärmebehandlung bei Umgebungsdruck durchgeführt wird.

Auf diese Weise kann die Wärmebehandlung ohne großen Aufwand auch in einfach aufgebauten Wärmebehandlungsgeräten, wie etwa Öfen oder Durchlauferhitzungsgeräten durchgeführt werden.

Bei einer Weiterbildung des Verfahrens kann vorgesehen sein, dass eine Zeitdauer der Wärmebehandlung ausgewählt wird aus einem Bereich von 0,01 h bis 50 h.

Durch Auswahl einer Zeitdauer für die nicht schmelzende Wärmebehandlung aus dem angegeben Bereich, kann eine jeweilige, gewünschte Schüttdichte des Zwischengranulats gezielt beeinflusst werden. Hierbei hat sich die Auswahl einer Zeitdauer aus dem angegeben Bereich als besonders gut geeignet für die Wärmebehandlung erwiesen. Im Besonderen kann eine Zeitdauer der Wärmebehandlung ausgewählt werden aus einem Bereich von 0,1 h bis 40 h, insbesondere von 0,5 h bis 30 h.

Bei einer weiteren Weiterbildung kann vorgesehen sein, dass das Zwischengranulat nach der Wärmebehandlung durch Trennung nach Dichte in mehrere Dichtefraktionen aufgeteilt wird.

Diese Möglichkeit ergibt sich durch Vorliegen des Zwischengranulats in granulärer, schüttfähiger Form. Auf diese Weise kann das Zwischengranulat einer Klassifizierung nach Dichte unterzogen werden. Die Dichtefraktionen des Zwischengranulats können sodann zur weiteren Verarbeitung jeweils gezielt herangezogen bzw. eingesetzt werden. Eine derartige Verfahrensmaßnahme kann bei dem vorbekannten Verfahren, bei welchem ein Körper einer Wärmebehandlung unterzogen wird, nicht durchgeführt werden.

In weiterer Folge kann zum Beispiel vorgesehen sein, dass für die folgende Formung des Schaumstoffkörpers jeweils ausschließlich Zwischengranulat einer der Dichtefraktionen eingesetzt wird.

Auf diese Weise können durch den Schritt der Formung Schaumstoffkörper mit besonders einheitlicher Dichte über alle Bereiche des Schaumstoffkörpers hergestellt werden, bzw. können lokale Dichteunterschiede in dem Schaumstoffkörper weitestgehend hintangehalten werden. Dies wiederum wirkt sich positiv auf die Eigenschaften, insbesondere positiv auf die mechanischen Eigenschaften des Schaumstoffkörpers aus.

Es kann auch eine Verfahrensführung zweckmäßig sein, bei welcher dem Zwischengranulat vor der Formung des Schaumstoffkörpers wenigstens ein Additiv beigemischt wird.

Die Auswahl der Art und Menge von Additiven kann hierbei je nach Einsatzzweck bzw. Verwendung des jeweiligen Schaumstoffkörpers erfolgen. Beispielsweise können Additive beigemengt werden, um einen Brandwiderstand des Schaumstoffkörpers zu verbessern. Als weitere Beispiele für mögliche Additive seien Farbpigmente, Antioxidantien oder Lichtschutzmittel genannt. Diese Maßnahme ist im Gegensatz zum Stand der Technik, bei welchem ein Körper einer Wärmebehandlung unterzogen wird, möglich, da im Zuge der Wärmebehandlung ein schüttfähiges Zwischengranulat gebildet bzw. hergestellt wird.

Bei einer weiteren Verfahrensvariante kann vorgesehen sein, dass vor der Formung des Schaumstoffkörpers das Zwischengranulat und mindestens ein zusätzliches, konstruktives Element in den Formraum des Formwerkzeugs gegeben werden, wobei das mindestens eine konstruktive Element im Zuge der Formung des Schaumstoffkörpers zu einem Bestandteil des Schaumstoffkörpers wird.

Im Gegensatz zum vorbekannten Stand der Technik ist auch diese Maßnahme durchführbar, da aus der Wärmebehandlung ein schüttfähiges Zwischengranulat hergestellt wird. Durch diese Verfahrensmaßnahme können die mechanischen Eigenschaften der Schaumstoffkörper nochmals weiter beeinflusst werden. Beispielsweise kann vorgesehen sein, dass ein oder mehrere Gelege oder Gewebe aus faserigem Material(ien) gemeinsam mit dem Zwischengranulat in den Formraum des ersten Teils des Formwerkzeugs gegeben werden. Derartige Gelege oder Gewebe können zum Beispiel aus Textil- oder Kunststoffasern gebildet sein. Durch zusätzliche Verwendung derartiger, konstruktive Elemente kann zum Beispiel eine Biegefestigkeit der Schaumstoffkörper nochmalig weiter gesteigert werden. Im Gegensatz zum vorbekannten Stand der Technik mit Wärmebehandlung eines Körpers, ist auch diese Maßnahme durchführbar, da aus der Wärmebehandlung ein schüttfähiges Zwischengranulat gebildet wird.

Bei einer Weiterbildung des Verfahrens kann vorgesehen sein, dass zur Formung des Schaumstoffkörpers das Zwischengranulat in dem Formraum auf eine Temperatur, ausgewählt aus einem Bereich von 120 °C bis 150 °C, erhitzt wird. Vorzugsweise kann das Zwischengranulat zur Formung des Schaumstoffkörpers in dem Formraum auf eine Temperatur, ausgewählt aus einem Bereich von 130 °C bis 140 °C, erhitzt werden.

Eine Temperatur, ausgewählt aus dem angegeben Bereich ist geeignet, um die volumenreduzierten Partikel des Zwischengranulats in dem Formraum materialschlüssig miteinander bzw. untereinander zu verbinden. Im Speziellen können so die volumenreduzierten Partikel oberflächlich erweicht werden, und kann eine materialschlüssige Verbindung durch oberflächliches Verkleben, Sintern und/oder Verschweißen der einzelnen Partikel untereinander durchgeführt werden, und kann so ein Schaumstoffkörper hergestellt werden.

Grundsätzlich sind mehrere Möglichkeiten zum Erhitzen des thermoplastischen Kunststoffs in dem Formraum denkbar, wie zum Beispiel mittels Heizelementen oder Heizmedien beheizbare Formwerkzeuge.

Vorzugsweise kann vorgesehen sein, dass zum Erhitzen des Zwischengranulats während der Formung des Schaumstoffkörpers Wasserdampf in den Formraum eingeleitet wird.

Hierdurch kann eine besonders effiziente Methode zum möglichst raschen und möglichst gleichzeitigen Erhitzen aller Bereiche des Formraums bzw. aller Partikel des Zwischengranulats in dem Formraum bereitgestellt werden. Auf diese Weise können beispielweise mögliche Inhomogenitäten in den hergestellten Schaumstoffkörpern, welche allenfalls durch ein Erhitzen des Formraums von außen resultieren können hintangehalten werden.

Des Weiteren kann auch vorgesehen sein, dass das Zwischengranulat während der Formung in dem Formraum mit einer mechanischen Spannung, ausgewählt aus einem Bereich von 0,01 N/mm² bis 2 N/mm², vorzugsweise ausgewählt aus einem Bereich von 0,1 N/mm² bis 1 N/mm² beaufschlagt wird.

Auf diese Weise kann das materialschlüssige Verbinden der volumenreduzierten Partikel des Zwischengranulats in dem Formraum wirksam unterstützt werden, sodass ein Schaumstoffkörper hergestellt werden kann. In weiterer Folge kann hierdurch auch die Zeitdauer des Verfahrensschrittes der Formung vorteilhafterweise verkürzt werden. Eine mechanische Spannung auf das Zwischengranulat kann zum Beispiel durch Gegeneinanderdrücken zweier Formteile eines Formwerkzeugs aufgebracht werden. Damit einhergehend kann eine Verkleinerung des Formraums durchgeführt werden. Ein Formteil kann in diesem Fall zum Beispiel in der Art eines Pressenstempels ausgeführt bzw. eingesetzt werden.

Bei einer Weiterbildung des Verfahrens kann auch vorgesehen sein, dass am Ende der Formung des Schaumstoffkörpers, vor der Verfestigung des Kunststoffs durch Erkalten ein Druck in dem Formraum auf Umgebungsdruck abgesenkt wird.

Dies kann beispielweise durch Öffnen eines oder mehrerer, strömungstechnisch mit dem Formraum verbundenen Auslassorgane durchgeführt werden. Gleichzeitig oder unmittelbar darauf folgend, können vor der Verfestigung des Kunststoffes durch Erkalten, Formteile eines Formwerkzeugs voneinander getrennt werden. Hierdurch kann durch vermutlich im Inneren der Partikel noch vorhandenen Überdruck im Vergleich zum Umgebungsdruck, eine Expansion der den Schaumstoffkörper bildenden Partikel, und damit eine Re-Expansion des Schaumstoffkörpers vor der Verfestigung des Kunststoffs erzielt werden. Im Falle von einaxialer Beaufschlagung des Zwischengranulats mit einer mechanischen Spannung, beispielsweise durch Ausgestaltung und Verwendung eines Formteils als Pressstempel, können auf diese Weise Dichte-Inhomogenitäten aufgrund der einaxialen Beaufschlagung mit einer mechanischen Spannung hintangehalten werden. Generell können durch eine derartige Verfahrensführung Schaumstoffkörper mit besonders guter Qualität hergestellt werden.

Im Speziellen kann auch vorgesehen sein, dass vor der Verfestigung des Kunststoffs durch Erkalten in dem Formraum ein Unterdruck erzeugt wird.

Auf diese Weise kann eine Druckdifferenz zwischen dem Inneren der Partikel und dem Formraum nochmals weitere gesteigert werden, wodurch eine Re-Expansion der den Schaumstoffkörper bildenden Partikel, bzw. des Schaumstoffkörpers unterstützt werden kann.

Der Schaumstoffkörper weist eine Gesamtdichte von 80 kg/m³ bis 600 kg/m³ auf, wobei aus beliebigen Bereichen des Schaumstoffkörpers herausgeschnittene Probestücke eine Dichte mit einer Abweichung von weniger als 20 % von der Gesamtdichte des Schaumstoffkörpers aufweisen.

Hierdurch kann ein Schaumstoffkörper bereitgestellt werden, welcher kaum örtliche Inhomogenitäten in seiner Dichte aufweist. Bei einem solchen Schaumstoffkörper können somit allfällige Beschädigungen unter Belastung, welche beispielsweise aufgrund von Bereichen mit geringerer Dichte als der Gesamtdichte resultieren können, hintangehalten werden.

Im Besonderen kann vorgesehen sein, dass ein Wert für die Druckspannung bei 10 % Stauchung zwischen 0,9 N/mm² und 10,5 N/mm² beträgt.

Hierdurch kann ein Schaumstoffkörper bereitgestellt werden, welcher auch höheren Druckbelastungen standhalten kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel für einen ersten Verfahrensschritt des Verfahrens zur Herstellung eines Schaumstoffkörpers;
- Fig. 2: ein Ausführungsbeispiel für einen zweiten Verfahrensschritt des Verfahrens zur Herstellung des Schaumstoffkörpers;
- Fig. 3: ein weiteres Ausführungsbeispiel für den zweiten Verfahrensschritt des Verfahrens zur Herstellung des Schaumstoffkörpers;
- Fig. 4: ein Ausführungsbeispiel für einen weiteren Verfahrensschritt des Verfahrens zur Herstellung des Schaumstoffkörpers.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Das Verfahren zur Herstellung eines Schaumstoffkörpers umfasst mehrere Verfahrenschritte. In einem ersten Verfahrensschritt wird ein schüttfähiges bzw. rieselfähiges Ausgangsgranulat 1 aus expandierten Partikeln eines thermoplastischen Kunststoffs bereitgestellt. Als Ausgangs- bzw. Rohmaterial kann hierbei im Prinzip jedwedes geschäumtes Material umfassend expandierte Partikel aus einem thermoplastischen Kunststoff, wie etwa aus Polyolefinen oder Polystyrol herangezogen werden. Geschäumte Produkte aus Polystyrol sind hierbei in großen Mengen verfügbar. Es kann zum Beispiel vorgesehen sein, dass Abfall aus rieselfähigem, geschäumtem Polystyrol aus einer Produktion von geschäumten Polystyrol-Produkten als Ausgangsmaterial 1 bereitgestellt wird.

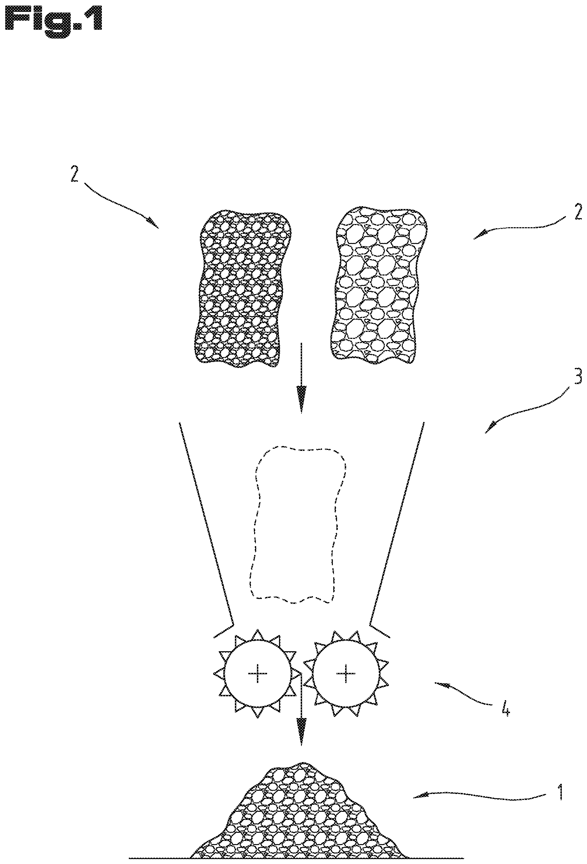

Alternativ oder zusätzlich kann zum Beispiel auch vorgesehen sein, dass zur Bereitstellung des Ausgangsgranulats Schaumstoffgegenstände 2 aus thermoplastischen Kunststoff, beispielsweise Verpackungen aus expandiertem Polystyrol (EPS), oder andere, recycelte Schaumstoffgegenstände 2 zerkleinert werden. Eine Zerkleinerung kann hierbei mittels an sich bekannten Zerkleinerungsvorrichtungen 3 vorgenommen werden, wie dies in der Fig. 1 rein schematisch anhand eines Shredders 4 dargestellt ist.

Hierbei ist es durchaus möglich, dass die geschäumten Ausgangsmaterialien unterschiedliche geometrische Formen, Größen und Dichten bzw. Rohdichten aufweisen. Es kann zum Beispiel ohne Weiteres vorgesehen sein, dass zur Bereitstellung des Ausgangsgranulats 1 Schaumstoffgegenstände mit unterschiedlicher Dichte zerkleinert werden. Das bereitgestellte Ausgangsgranulat kann in solchen Fällen also durchaus expandierte Partikel bzw. Stücke mit unterschiedlichen Rohdichten aufweisen. Das Ausgangsgranulat 1 kann beispielsweise eine Schüttdichte von 5 kg/m³ bis 30 kg/m³ aufweisen.

Des Weiteren ist es möglich, dass das Ausgangsgranulat 1 geringfügige Rückstände an Verschmutzungen oder Verunreinigungen aufweist, welche auf die folgenden Verfahrensschritte und die mittels des Verfahrens hergestellten Schaumstoffkörper keinen wesentlichen Einfluss haben. Geringfügige Mengen an anderen Stoffen, wie etwa restliches Treibmittel oder andere während der Produktion des Ausgangsmaterials eingesetzte Stoffe können ebenso im Ausgangsgranulat vorhanden sein, und haben auch diese Stoffe keinen wesentlichen Einfluss auf das Verfahren oder die Eigenschaften der hergestellten Schaumstoffkörper.

Vorzugsweise wird geschäumtes Material aus zumindest vorwiegend einem einzigen thermoplastischen Kunststoff, zum Beispiel Polystyrol, als Ausgangsgranulat 1 bereitgestellt. Dies unter anderem auch deshalb, da unterschiedliche thermoplastische Kunststoffe auch unterschiedliche (Verarbeitungs-)Eigenschaften, wie etwa unterschiedliche Glasübergangstemperaturen oder unterschiedliche mechanische Eigenschaften aufweisen können. Aus diesem können auch jeweils unterschiedliche Verfahrensparameter für unterschiedliche thermoplastische Kunststoffe erforderlich sein, sodass unterschiedliche Kunststoffe nicht effizient gemeinsam verarbeitet werden können.

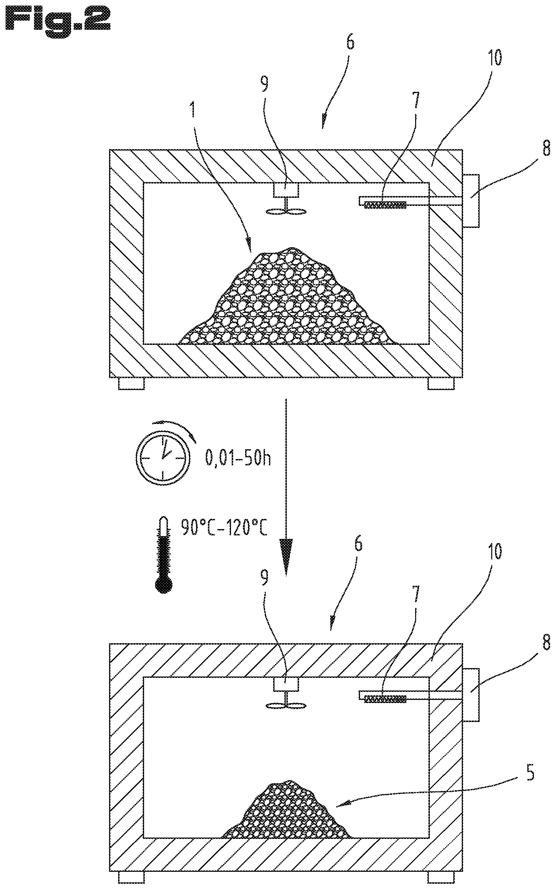

Nach Bereitstellung wird das Ausgangsgranulat 1 in einem zweiten Verfahrensschritt weiterverarbeitet. Wie in der Fig. 2 schematisch veranschaulicht ist, wird in dem zweiten Verfahrensschritt aus dem Ausgangsgranulat 1 ein schüttfähiges bzw. rieselfähiges Zwischengranulat 5 mit einer größeren Schüttdichte als jener des Ausgangsgranulats 1 gebildet. Dies erfolgt durch Volumenreduzierung der expandierten Partikeln des Ausgangsgranulats 1, indem das Ausgangsgranulat 1 einer nicht schmelzenden Wärmebehandlung unterzogen wird.

Das Ausgangsgranulat 1 kann zur Wärmebehandlung in einen Ofen 6 gegeben werden, welcher Ofen 6 in dem in der Fig. 2 dargestellten Ablaufschema jeweils in Schnittdarstellung veranschaulicht ist. Wie anhand des in der Fig. 2 dargestellten Ausführungsbeispiels ersichtlich ist, kann der Ofen 6 zum Beispiel ein oder mehrere Heizelement(e) 7, sowie eine Temperaturregelvorrichtung 8 aufweisen. Des Weiteren kann beispielsweise eine Umluftvorrichtung 9 vorgesehen sein. Vorzugsweise weist der Ofen 6 zusätzlich eine Wärmedämmung 10 auf. Die Heizelemente 7 können beispielsweise durch elektrische Heizelemente, oder aber auch durch Infrarotstrahler oder andere Heizmittel gebildet sein. Grundsätzlich ist zum Erhitzen des Ofens 6 anstelle der Heizelemente 7 auch ein Beschicken des Ofens mit einem erhitzten Wärmeträger, wie etwa Luft, Wasserdampf oder einem Luft-Wasserdampfgemisch denkbar.

Um die Volumenreduktion für die expandierten Partikel des Ausgangsgranulats 1 möglichst gleichmäßig einzuleiten, kann die Temperatur im Ofen 6 vorzugsweise langsam auf die jeweils gewünschte Temperatur für die Wärmebehandlung erhöht werden. Hierbei kann der Ofen 6 vorab auch auf eine bestimmte Temperatur, beispielsweise 60 °C bis 80 °C vorgeheizt werden, bevor das Ausgangsgranulat 1 in den Ofen 6 gegeben wird. Während der Wärmebehandlung kann die jeweils gewünschte Temperatur mittels der Temperaturregelvorrichtung 8 möglichst konstant gehalten werden.

Hierbei kann vorgesehen sein, dass die Wärmebehandlung bei einer Temperatur im Bereich der Glasübergangstemperatur des thermoplastischen Kunststoffs des jeweils bereitgestellten Ausgangsgranulats 1 durchgeführt wird. Beispielsweise kann vorgesehen sein, dass die Wärmebehandlung bei einer Temperatur, ausgewählt aus einem Bereich von 90 °C bis 120 °C, durchgeführt wird. Dieser Temperaturbereich ist besonders zweckmäßig für die Wärmebehandlung des Ausgangsgranulats 1, da einerseits in diesem Temperaturbereich eine ausreichende Volumenreduzierung für die Partikel des Ausgangsgranulats 1 erzielt werden kann.

Andererseits kann aus dem angegebenen Temperaturbereich aber auch eine Temperatur für die Wärmebehandlung gewählt werden, welche unterhalb einer allfälligen Schmelztemperatur des Kunststoffes des jeweils bereitgestellten Ausgangsgranulats 1 liegt, sodass die Partikel während der Wärmebehandlung nicht miteinander verbunden werden. Des Weiteren hat es sich als vorteilhaft erwiesen, wenn die Wärmebehandlung bei Umgebungsdruck durchgeführt wird.

Wie in der Fig. 2 schematisch veranschaulicht ist, wird durch die Wärmebehandlung eine Volumenreduzierung für die Partikel des Ausgangsgranulats 1 bewirkt, sodass nach der Wärmebehandlung ein Zwischengranulat 5 mit im Volumen reduzierten Partikeln erhalten wird. Dementsprechend weist das Zwischengranulat 5 eine größere Schüttdichte auf, als das Ausgangsgranulat 1, wie dies auch aus der Fig. 2 erkennbar ist.

Grundsätzlich kann ein Ausmaß der Volumenreduzierung der Partikel, und damit eine jeweils gewünschte Schüttdichte für das Zwischengranulat 5, durch Wahl der Temperatur und der Zeitdauer der Wärmebehandlung beeinflusst werden. Durch Auswahl einer höheren Temperatur für die Wärmebehandlung kann einerseits eine Beschleunigung der Volumenreduktion für die Partikel erreicht werden. Auch kann durch höhere Temperaturen das Ausmaß der Volumenreduzierung der Partikel erhöht werden. Dahingegen wird durch Auswahl einer niedrigeren Temperatur für die Wärmebehandlung die Volumenreduzierung verlangsamt, und insgesamt ein geringeres Ausmaß an Volumenreduzierung erreicht.

Auch kann durch Verlängerung der Zeitdauer der Wärmebehandlung das Ausmaß der Volumenreduktion für die Partikel erhöht werden, wohingegen eine Verringerung der Zeitdauer der Wärmebehandlung ein geringeres Ausmaß der Volumenreduzierung bewirkt. Vorzugsweise kann eine Zeitdauer der Wärmebehandlung ausgewählt werden aus einem Bereich von 0,01 h bis 50 h, bevorzugt aus einem Bereich von 0,1 h bis 40 h, insbesondere aus einem Bereich von 0,5 h bis 30 h.

Die Volumenreduzierung der Partikel während der Wärmebehandlung resultiert aus einem Abbau von inneren Spannungen in den Partikeln, welche durch Aufschäumen und Einfrieren der geschäumten Struktur während der Herstellung des Ausgangsmaterials eingebracht wurden. Eine Korngröße der Partikel nimmt durch Abbau dieser inneren Spannungen während der Wärmebehandlung sukzessive ab.

Durch Wahl einer jeweiligen Temperatur und Zeitdauer der Wärmebehandlung kann eine nach der Wärmebehandlung, aufgrund der Volumenreduzierung der Partikel resultierende Schüttdichte des Zwischengranulats 5 beeinflusst werden. Eine zur Erzielung einer gewünschten Schüttdichte des Zwischengranulats 5 geeignete Wärmebehandlungstemperatur und -zeitdauer, hängt hierbei vor allem von der Art des thermoplastischen Kunststoffs des Ausgangsgranulats 1, sowie von der Schüttdichte des Ausgangsgranulats 1 ab. Jeweils geeignete Temperaturen und Zeitdauern der Wärmebehandlung können zum Beispiel für jeden Fall in einfacher Art und Weise experimentell durch Versuche ermittelt werden.

Für die Herstellung von Schaumstoffkörpern mit besonders brauchbaren Dämmeigenschaften und mechanischen Eigenschaften hat es sich als zweckmäßig erwiesen, wenn durch die Wärmebehandlung eine Schüttdichte des Zwischengranulats - bezogen auf eine Schüttdichte bzw. verglichen mit der Schüttdichte des Ausgangsgranulats vor der Wärmebehandlung - auf das 5-fache bis 40-fache vergrößert wird. Es kann zum Beispiel vorgesehen sein, dass durch die Wärmebehandlung eine Schüttdichte des Zwischengranulats auf einen Wert, ausgewählt aus einem Bereich von 50 kg/m³ bis 500 kg/m³ eingestellt wird.

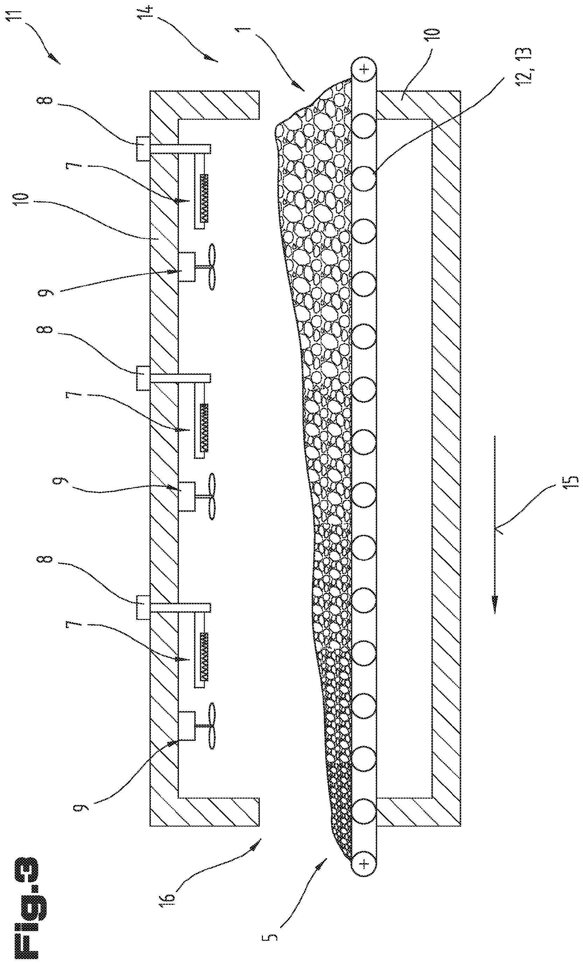

In der Fig. 3 ist eine alternative Ausführungsvariante der nicht schmelzenden Wärmebehandlung dargestellt. In der Fig. 3 werden für gleiche Teile gleiche Bezugszeichen bzw. Bauteilbezeichnungen wie in den vorangegangenen Fig. 1 und Fig. 2 verwendet. Um unnötige Wiederholungen zu vermeiden, wird auf die detaillierte Beschreibung in den vorangegangenen Fig. 1 und Fig. 2 hingewiesen bzw. Bezug genommen.

Bei dem in der Fig. 3 dargestellten Ausführungsbeispiel wird die Wärmebehandlung in einem Durchlaufofen 11 kontinuierlich ausgeführt. Der in Schnittdarstellung dargestellte Durchlaufofen 11 weist wiederum mehrere, über eine oder mehrere Temperaturregelvorrichtung(en) 8 steuerbare Heizelemente 7, sowie mehrere Umluftvorrichtungen 9 und eine Wärmedämmung 10 auf. Des Weiteren ist ein Fördermittel 12, beispielsweise ein angetriebenes Förderband 13 zum Transportieren der Partikel durch den Durchlaufofen 11 vorgesehen.

Die expandierten Partikel des Ausgangsgranulats 1 können an einer Eingangsseite 14 des Durchlaufofens 11 kontinuierlich auf das Fördermittel 12 aufgegeben werden, und in einer Transportrichtung 15 durch den Durchlaufofen 11 befördert werden. Eine Zeitdauer der Wärmebehandlung kann in diesem Fall durch die Fördergeschwindigkeit durch den Durchlaufofen 11 festgelegt werden. Des Weiteren kann zum Beispiel vorgesehen sein, dass eine Temperatur im Durchlaufofen in der Nähe der Eingangsseite 14 geringer eingestellt ist, als weiter im inneren des Durchlaufofens 11.

Wie in der Fig. 3 veranschaulicht ist, werden die Partikel des Ausgangsgranulats 1 im Zuge der Wärmebehandlung in dem Durchlaufofen 11 wiederum in ihrem Volumen reduziert. Nach Transport durch den Durchlaufofen 11 kann an einer Ausgangsseite 16 des Durchlaufofens 11 das Zwischengranulat 5 mit größerer Schüttdichte als der Schüttdichte des Ausgangsgranulats 1, kontinuierlich erhalten werden.

Bei einer Verfahrensvariante kann vorgesehen sein, dass das Zwischengranulat 5 nach der Wärmebehandlung durch Trennung nach Dichte in mehrere Dichtefraktionen aufgeteilt wird. Eine Trennung nach Dichte kann hierbei mit üblichen Methoden durchgeführt werden, als Beispiele seien etwa Windsichten, Zentrifugation, (Ab-)Setzen bzw. Sedimentation oder Schwertrübetrennung genannt.

Nach einer solchen Aufteilung bzw. Klassifizierung des Zwischengranulats 5 in Dichtefraktionen kann in weiterer Folge vorgesehen sein, dass für einen folgenden Verfahrensschritt zur Formung des Schaumstoffkörpers jeweils ausschließlich Zwischengranulat 5 einer der Dichtefraktionen eingesetzt wird. Durch diese Vorgangsweise können Schaumstoffkörper mit weitestgehend einheitlicher Dichte in allen Bereichen hergestellt werden, was sich letztlich positiv auf die Eigenschaften, insbesondere positiv auf die mechanischen Eigenschaften des Schaumstoffkörpers auswirkt.

Es kann auch eine Verfahrungsführung zweckmäßig sein, bei welcher dem Zwischengranulat vor der Formung des Schaumstoffkörpers wenigstens ein Additiv beigemischt wird. Beispielsweise kann ein Additiv beigemengt werden, welches einen Brandwiderstand eines Schaumstoffkörpers zu verbessern vermag. Als weitere Beispiele für mögliche Additive seien Farbpigmente, Antioxidantien oder Lichtschutzmittel genannt.

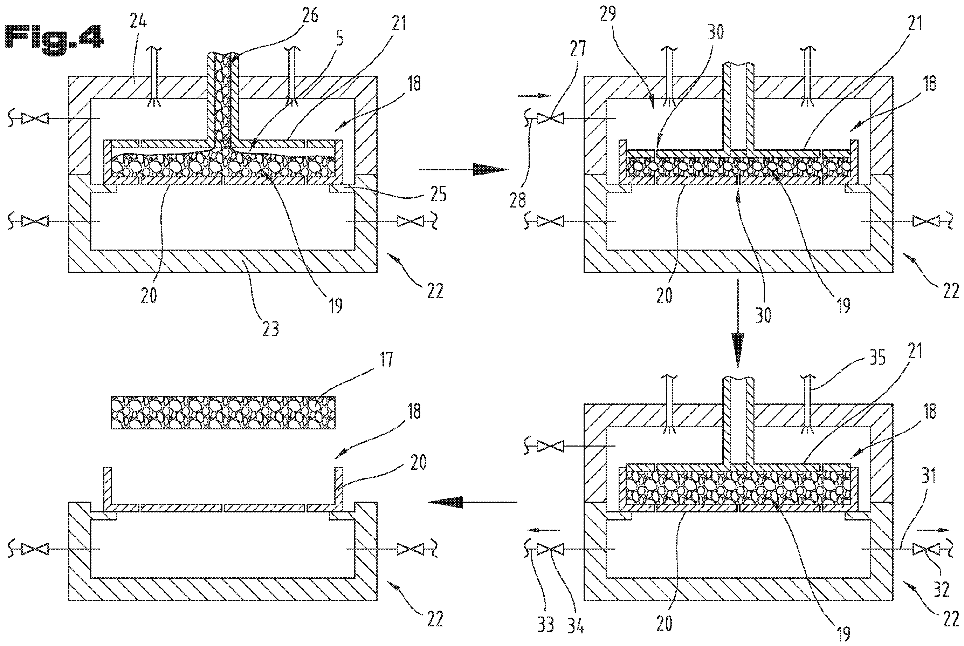

Unabhängig von der Ausführungsform des Verfahrensschritts der Wärmebehandlung, und von allfälligen, zusätzlichen Verfahrensschritten hiernach, wird folgend ein weiterer Verfahrensschritt zur Formung des Schaumstoffkörpers 17 durchgeführt. In der Fig. 4 ist schematisch ein Ausführungsbeispiel für die Formung des Schaumstoffkörpers 17 mittels eines Formwerkzeug 18 schematisch dargestellt. In der Fig. 4 werden für gleiche Teile gleiche Bezugszeichen bzw. Bauteilbezeichnungen wie in den vorangegangenen Fig. 1 bis Fig. 3 verwendet. Um unnötige Wiederholungen zu vermeiden, wird auf die detaillierte Beschreibung in den vorangegangenen Fig. 1 bis Fig. 3 hingewiesen bzw. Bezug genommen. In der Fig. 4 sind vier Zustände während des Schrittes der Formung des Schaumstoffkörpers 17 dargestellt, wobei die zwischen den Zuständen eingezeichneten Pfeile einen sequentiellen Ablauf der Zustände kennzeichnen. Auch in der Fig. 4 werden die dargestellten Elemente bzw. Apparaturen wiederum in Schnittdarstellung veranschaulicht.

Wie in der Fig. 4 schematisch veranschaulicht ist, wird zur Formung des Schaumstoffkörpers 17 das Zwischengranulat 5 in einen Formraum 19 eines Formwerkzeugs 18 gefüllt. Das Formwerkzeug 18 besteht bei dem dargestellten Ausführungsbeispiel aus einem ersten Formteil 20 und einem zweiten Formteil 21, wobei das zweite Formteil 21 gegenüber dem ersten Formteil 20 verstellbar ist. Bei dem dargestellten Ausführungsbeispiel ist das Formwerkzeug 18 also in der Art einer Formpresse ausgebildet.

Das Formwerkzeug 18 bzw. dessen Formteile 20, 21 sind bei dem in der Fig. 4 dargestellten Ausführungsbeispiel in einer verschließbaren Dampfkammer 22, bestehend aus einem ersten Kammerteil 23 und einem zweiten Kammerteil 24, angeordnet. Alternativ zu dem dargestellten Ausführungsbeispiel kann eine Dampfkammer 22 zum Beispiel auch einteilig ausgeführt sein, und eine mittels einer Klappe oder Tür verschließbare Öffnung aufweisen, um einen Zugang zu dem Formwerkzeug 18, zum Beispiel zur Entnahme eines fertigen Schaumstoffkörpers 17, zu erlauben.

Das erste Formteil 20 kann im Inneren der Dampfkammer 22 zum Beispiel auf einer oder mehreren Stützplatte(n) gelagert sein. Das zweite Formteil 21 kann mit einem nicht näher dargestellten, einaxialen Antrieb zur Verstellung des ersten Formteils 21 gegenüber dem zweiten Formteil 22 verbunden sein.

Das Zwischengranulat 5 kann zum Beispiel über eine Injektionsleitung 26 in den Formraum 19 gefüllt werden. Hiernach kann die Injektionsleitung 26, allenfalls nach Entfernen von überschüssigem Zwischengranulat, beispielsweise wieder mittels Druckluft oder Unterdruck, gegenüber dem Formraum 19 verschlossen werden, etwa durch Schließen einer Klappe, wie dies anhand des in der Fig. 4 rechts oben dargestellten Zustands ersichtlich ist. Alternativ ist auch eine manuelle Befüllung zum Beispiel des ersten Formteils 20 denkbar, während die Formteile 20, 21 des Formwerkzeugs 18 voneinander beabstandet sind.

Bei einer Verfahrensvariante kann auch vorgesehen sein, dass vor der Formung des Schaumstoffkörpers das Zwischengranulat 5 und mindestens ein zusätzliches, konstruktives Element in den Formraum 19 des Formwerkzeugs 18 gegeben werden. Ein solches, konstruktives Element ist aus Übersichtlichkeitsgründen in der Fig. 4 nicht dargestellt. Beispielsweise kann ein konstruktives Element durch ein Gelege oder Gewebe aus faserigem Material gebildet sein. Ein oder mehrere solche konstruktiven Elemente können zum Beispiel jeweils abwechselnd mit Zwischengranulat 5 in das erste Formteil 20 eingebracht bzw. eingelegt werden, wobei ein solches Einbringen durchaus maschinell gesteuert, aber grundsätzlich ebenso manuell erfolgen kann. Im Zuge der Formung des Schaumstoffkörpers 17 wird das mindestens eine, konstruktive Element zu einem Bestandteil des Schaumstoffkörpers 17.

Zur Formung des Schaumstoffkörpers 17 wird das Zwischengranulat 5 in dem Formraum 19 auf eine Temperatur größer als eine Glasübergangstemperatur des jeweiligen thermoplastischen Kunstoffs erhitzt. Bei dem in der Fig. 4 dargestellten Ausführungsbeispiel weist die Dampfkammer 22 hierzu einen, mit einer nicht näher dargestellten Quelle für Wasserdampf, über ein Absperrorgan 27 verbundenen Dampfanschluss 28 auf. Die Quelle für den erhitzten Wasserdampf kann beispielsweise durch einen beheizbaren Dampfkessel gebildet sein.

Zum Erhitzen des Zwischengranulats 5 während der Formung kann durch Öffnen des Absperrorgans 27 Wasserdampf in einen Dampfraum 29 der Dampfkammer 22 eingelassen werden.

Die Formteile 20, 21 können wie in der Fig. 4 veranschaulicht perforiert ausgeführt sein, und Öffnungen 30 aufweisen, durch welche der in den Dampfraum 29 eingeleitete Wasserdampf auch in den Formraum 19 geleitet wird. Hierdurch kann ein sehr schnelles und gleichmäßiges Erhitzen des Zwischengranulats 5 bewirkt werden. Alternativ sind natürlich auch andere Methoden zum Erhitzen des Zwischengranulats 5 in dem Formraum 19 denkbar, beispielsweise durch Infrarotstrahlung oder elektrische Heizelemente.

Grundsätzlich kann vorgesehen sein, dass zur Formung des Schaumstoffkörpers 17 das Zwischengranulat 5 in dem Formraum 22 auf eine Temperatur, ausgewählt aus einem Bereich von 120 °C bis 150 °C, erhitzt wird. Bevorzugt kann das Zwischengranulat zur Formung des Schaumstoffkörpers in dem Formraum auf eine Temperatur, ausgewählt aus einem Bereich von 130 °C bis 140 °C, erhitzt werden.

Durch das Erhitzen des Zwischengranulats 5 in dem Formraum 19 erweichen die volumenreduzierten Partikel des Zwischengranulats 5 oberflächlich, und werden die volumenreduzierten Partikel des Zwischengranulats 5 materialschlüssig durch oberflächliches Verkleben, Sintern bzw. Verschweißen verbunden, sodass ein Schaumstoffkörper 17 entsteht.

Zur Unterstützung des materialschlüssigen Verbindens der Partikel des Zwischengranulats 5 kann auch vorgesehen sein, dass das Zwischengranulat 5 während der Formung in dem Formraum 19 mit einer mechanischen Spannung, ausgewählt aus einem Bereich von 0,01 N/mm² bis 2 N/mm², vorzugsweise ausgewählt aus einem Bereich von 0,1 N/mm² bis 1 N/mm² beaufschlagt wird. Dies kann zum Beispiel durch Verkleinerung des Formraums 19 durch angetriebenes Verstellen des zweiten Formteils 21 relativ zum ersten Formteil 20 durchgeführt werden, wie dies anhand des rechts oben in der Fig. 4 dargestellten Zustands ersichtlich ist. Bei dem dargestellten Ausführungsbeispiel erfolgt eine Beaufschlagung mit einer mechanischen Spannung bzw. eine Verstellung des zweiten Formteils 21 entlang einer Verstellachse, also einaxial.

Das Erhitzen des Zwischengranulats 5 in dem Formraum 19, gegebenenfalls unter Beaufschlagung mit einer mechanischen Spannung, kann innerhalb einer Zeitdauer von beispielsweise 3 sec bis 20 sec durchgeführt werden. Anschließend wird der thermoplastische Kunststoff zur Bildung des Schaumstoffkörpers 17 durch Erkalten verfestigt werden.

In diesem Zusammenhang wird vorzugsweise am Ende der Formung des Schaumstoffkörpers 17, vor der Verfestigung des Kunststoffs durch Erkalten ein Druck in dem Formraum 19 auf Umgebungsdruck abgesenkt. Hierzu kann einerseits das zweite Formteil 21 von dem ersten Formteil 20 weg verstellt werden, wie dies anhand des in der Fig. 4 links unten dargestellten Zustands veranschaulicht ist. Des Weiteren kann vorgesehen sein, dass ein in dem Formraum 19 bzw. der Dampfkammer 22 herrschender Überdruck abgebaut wird. Bei dem in der Fig. 4 dargestellten Ausführungsbeispiel weist das erste Kammerteil 23 hierzu eine Ablassleitung 31 mit einem Absperrorgan 32 auf. Durch Öffnen des Absperrorgans 32 der Ablassleitung 31 können der Wasserdampf und andere Gase aus der Dampfkammer 22, und damit auch aus dem Formraum 19 abgelassen werden, und damit ein Druck in der Dampfkammer 22 bzw. dem Formraum 19 auf Umgebungsdruck abgesenkt werden.

Wie sich hierbei herausgestellt hat, kann durch eine solche Vorgangsweise eine Expansion der den Schaumstoffkörper 17 bildenden Partikel, und damit eine Re-Expansion des Schaumstoffkörpers 17 vor der Verfestigung des Kunststoffs erzielt werden. Dies wahrscheinlich aufgrund eines im Inneren der Partikel noch vorhandenen Überdruck im Vergleich zum Umgebungsdruck.

Bei einer weiteren Ausführungsvariante des Verfahrens kann ein solcher Re-Expansionsvorgang auch noch weiter dadurch unterstützt werden, dass vor der Verfestigung des Kunststoffs durch Erkalten in dem Formraum ein Unterdruck erzeugt wird. Bei dem in der Fig. 4 dargestellten Ausführungsbeispiel weist die Dampfkammer 22 hierzu einen Vakuumanschluss 33 auf, welcher wiederum über ein Absperrorgan 34 zum Beispiel mit einer Vakuumpumpe wirkverbunden sein kann. Bei geöffneten Absperrorgan 34 und laufender Vakuumpumpe kann sodann ein Unterdruck in der Dampfkammer 22 bzw. dem Formraum 19 erzeugt werden.

Als letzter Schritt der Formung wird der Schaumstoffkörper 17 durch Erkalten verfestigt. Das Erkalten kann hierbei passiv erfolgen, also durch Wärmeaustausch mit der Umgebung. Im Speziellen zur Verkürzung der Zeitdauer für die Verfestigung kann das Erkalten kann aber auch aktiv unterstützt werden. Zum Beispiel können in der Dampfkammer 22 Sprühvorrichtungen 35 vorgesehen sein, mittels welchen beispielsweise Kühlwasser auf die Formteile 20, 21, bzw. in den Formraum 19 gesprüht werden kann.

Nach dem Erkalten des Kunststoffs kann schließlich der fertige Schaumstoffkörper 17 nach Trennen der beiden Formteile 20, 21 und Öffnen der Dampfkammer 22 entnommen werden.

Der Schaumstoffkörper 17 kann grundsätzlich verschiedenste geometrische Formen und Dimensionen haben. Dies vor allem in Abhängigkeit von der geometrischen Ausgestaltung des Formraums 19 des Formwerkzeugs 18. Beispielsweise können quaderförmig ausgestaltete Schaumstoffkörper 17 hergestellt werden, welche sich besonders gut für bauliche Zwecke eignen. Die Dimensionen solcher quaderförmigen Schaumstoffkörper 17 können grundsätzlich beliebig gewählt sein, wobei sich Quader mit einer Länge von 50 mm bis 4000 mm, einer Breite von 50 mm bis 15000 mm und einer Dicke von 10 mm bis 200 mm gut bewährt haben. Wie bereits beschrieben sind aber auch andere Geometrien möglich, beispielsweise Schaumstoffkörper 17 mit trapezförmigen Querschnitt.

Mittels des Verfahrens können Schaumstoffkörper 17 mit, im Vergleich zu beispielsweise zu Ausgangsgegenständen welche zur Herstellung des Ausgangsgranulats 1 verwendet werden, verbesserten mechanischen Eigenschaften hergestellt werden.

Der Schaumstoffkörper 17 weist eine Gesamtdichte von 80 kg/m³ bis 600 kg/m³ auf, und zeichnet sich dadurch aus, dass aus beliebigen Bereichen des Schaumstoffkörpers 17 herausgeschnittene Probestücke eine Dichte mit einer Abweichung von weniger als 20 % von der Gesamtdichte des Schaumstoffkörpers 17 aufweisen. Rein beispielhaft können solche Probestücke Abmessungen von 10 cm x 10 cm x 10 cm haben. Durch eine solche einheitliche Dichte in allen Bereichen können im Besonderen Beschädigungen im Belastungsfall hintangehalten werden, da beispielsweise Sollbruchstellen in Bereichen geringerer Dichte vermieden werden. Dies wirkt sich auch positiv auf die mechanischen Eigenschaften aus.

Ein Wert für die Druckspannung bei 10 % Stauchung des Schaumstoffkörpers beträgt vorzugsweise zwischen 0,9 N/mm² und 10,5 N/mm². Zum Vergleich beträgt ein Wert für die Druckspannung bei 10 % Stauchung bei gebräuchlichen, geschäumten Schaumstoffgegenständen, wie etwa Verpackungen oder Dämmplatten aus expandiertem Poylstyrol (EPS), in etwa 0,2 N/mm² bis 0,3 N/mm².

Durch das Verfahren, insbesondere die Volumenreduzierung der Partikel bzw. die Erhöhung der Schüttdichte während der Wärmebehandlung, können somit Schaumstoffkörper mit deutlich verbesserten, mechanischen Eigenschaften bereitgestellt werden, welche dennoch beispielsweise gute Wärmedämmeigenschaften aufweisen. Durch die verbesserten mechanischen Eigenschaften, können die Schaumstoffkörper 17 aber auch in Bereichen eingesetzt werden, welche für herkömmliche Schaumstoffgegenstände nicht geeignet sind. Zum Beispiel können die Schaumstoffkörper als tragende Wärmedämmelemente an Gebäudesockeln zur Vermeidung von Wärmebrücken, oder auch zur wärmetechnischen Entkoppelung von tragenden Bauteilen, wie etwa zwischen Stützen und Decken verwendet werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Ausgangsgranulat | 31 | Ablassleitung |
| 2 | Schaumstoffgegenstand | 32 | Absperrorgan |
| 3 | Zerkleinerungsvorrichtung | 33 | Vakuumanschluss |
| 4 | Shredder | 34 | Absperrorgan |
| 5 | Zwischengranulat | 35 | Sprühvorrichtung |
| 6 | Ofen | | |
| 7 | Heizelement | | |
| 8 | Temperaturregelvorrichtung | | |
| 9 | Umluftvorrichtung | | |
| 10 | Wärmedämmung | | |
| 11 | Durchlaufofen | | |
| 12 | Fördermittel | | |
| 13 | Förderband | | |
| 14 | Eingangsseite | | |
| 15 | Transportrichtung | | |
| 16 | Ausgangsseite | | |
| 17 | Schaumstoffkörper | | |
| 18 | Formwerkzeug | | |
| 19 | Formraum | | |
| 20 | Formteil | | |
| 21 | Formteil | | |
| 22 | Dampfkammer | | |
| 23 | Kammerteil | | |
| 24 | Kammerteil | | |
| 25 | Stützplatte | | |
| 26 | Injektionsleitung | | |
| 27 | Absperrorgan | | |
| 28 | Dampfanschluss | | |
| 29 | Dampfraum | | |
| 30 | Öffnung | | |

## Patentansprüche

1. Verfahren zur Herstellung eines Schaumstoffkörpers (17), umfassend die Schritte
- Bereitstellung eines schüttfähigen Ausgangsgranulats (1) aus expandierten Partikeln eines thermoplastischen Kunststoffs,
- Bildung eines schüttfähigen Zwischengranulats (5) mit einer größeren Schüttdichte als jener des Ausgangsgranulats (1) durch Volumenreduzierung der Partikeln des Ausgangsgranulats (1), indem das Ausgangsgranulat (1) einer nicht schmelzenden Wärmebehandlung unterzogen wird, und
- folgend Formung des Schaumstoffkörpers (17) durch materialschlüssiges Verbinden der volumenreduzierten Partikel des Zwischengranulats (5), indem das Zwischengranulat (5) in einem Formraum eines Formwerkzeugs (18) auf eine Temperatur größer als eine Glasübergangstemperatur des thermoplastischen Kunstoffs erhitzt wird, und anschließend der thermoplastische Kunststoff durch Erkalten verfestigt wird.

2. Verfahren nach Anspruch 1, **dadurch gekennzeichnet, dass** zur Bereitstellung des Ausgangsgranulats (1) Schaumstoffgegenstände aus dem thermoplastischen Kunststoff zerkleinert werden.

3. Verfahren nach Anspruch 2, **dadurch gekennzeichnet, dass** Schaumstoffgegenstände mit unterschiedlicher Dichte zerkleinert werden.

4. Verfahren nach einem der vorhergehenden Ansprüche, **dadurch gekennzeichnet, dass** durch die Wärmebehandlung eine Schüttdichte des Zwischengranulats (5) - bezogen auf eine Schüttdichte des Ausgangsgranulats (1) vor der Wärmebehandlung - auf das 5- fache bis 40-fache vergrößert wird.

5. Verfahren nach einem der vorhergehenden Ansprüche, **dadurch gekennzeichnet, dass** durch die Wärmebehandlung eine Schüttdichte des Zwischengranulats (5) auf einen Wert, ausgewählt aus einem Bereich von 50 kg/m³ bis 500 kg/m³ eingestellt wird.

6. Verfahren nach einem der vorhergehenden Ansprüche, **dadurch gekennzeichnet, dass** die Wärmebehandlung bei einer Temperatur im Bereich der Glasübergangstemperatur des thermoplastischen Kunststoffs durchgeführt wird.

7. Verfahren nach Anspruch 6, **dadurch gekennzeichnet, dass** die Wärmebehandlung bei einer Temperatur, ausgewählt aus einem Bereich von 90 °C bis 120 °C, durchgeführt wird.

8. Verfahren nach einem der vorhergehenden Ansprüche, **dadurch gekennzeichnet, dass** die Wärmebehandlung bei Umgebungsdruck durchgeführt wird.

9. Verfahren nach einem der vorhergehenden Ansprüche, **dadurch gekennzeichnet, dass** eine Zeitdauer der Wärmebehandlung ausgewählt wird aus einem Bereich von 0,01 h bis 50 h.

10. Verfahren nach einem der vorhergehenden Ansprüche, **dadurch gekennzeichnet, dass** das Zwischengranulat (5) nach der Wärmebehandlung durch Trennung nach Dichte in mehrere Dichtefraktionen aufgeteilt wird.

11. Verfahren nach Anspruch 10, **dadurch gekennzeichnet, dass** für die folgende Formung des Schaumstoffkörpers jeweils ausschließlich Zwischengranulat einer der Dichtefraktionen eingesetzt wird.

12. Verfahren nach einem der vorhergehenden Ansprüche, **dadurch gekennzeichnet, dass** dem Zwischengranulat vor der Formung des Schaumstoffkörpers wenigstens ein Additiv beigemischt wird.

13. Verfahren nach einem der vorhergehenden Ansprüche, **dadurch gekennzeichnet, dass** vor der Formung des Schaumstoffkörpers das Zwischengranulat und mindestens ein zusätzliches, konstruktives Element in den Formraum des Formwerkzeugs gegeben werden, wobei das mindestens eine konstruktive Element im Zuge der Formung des Schaumstoffkörpers zu einem Bestandteil des Schaumstoffkörpers wird.

14. Verfahren nach einem der vorhergehenden Ansprüche, **dadurch gekennzeichnet, dass** zur Formung des Schaumstoffkörpers (17) das Zwischengranulat (5) in dem Formraum (22) auf eine Temperatur, ausgewählt aus einem Bereich von 120 °C bis 150 °C, erhitzt wird.

15. Verfahren nach einem der vorhergehenden Ansprüche, **dadurch gekennzeichnet, dass** zum Erhitzen des Zwischengranulats (5) während der Formung Wasserdampf in den Formraum (22) eingeleitet wird.

16. Verfahren nach einem der vorhergehenden Ansprüche, **dadurch gekennzeichnet, dass** das Zwischengranulat (5) während der Formung in dem Formraum (19) mit einer mechanischen Spannung, ausgewählt aus einem Bereich von 0,01 N/mm² bis 2 N/mm² beaufschlagt wird.

17. Verfahren nach einem der vorhergehenden Ansprüche, **dadurch gekennzeichnet, dass** am Ende der Formung des Schaumstoffkörpers (17), vor der Verfestigung des Kunststoffs durch Erkalten ein Druck in dem Formraum (19) auf Umgebungsdruck abgesenkt wird.

18. Verfahren nach Anspruch 17, **dadurch gekennzeichnet, dass** vor der Verfestigung des Kunststoffs durch Erkalten in dem Formraum (19) ein Unterdruck erzeugt wird.

## Claims

1. A method for producing a foam material body (17) comprising the steps of
- providing a pourable starting granulate (1) of expanded particles of a thermoplastic material,
- forming a pourable intermediate granulate (5) having a bulk density higher than that of the starting granulate (1) by means of volume reduction of the particles of the starting granulate (1) by subjecting the starting granulate (1) to a non-melting heat treatment, and
- subsequently molding the foam material body (17) by means of material connection of the volume-reduced particles of the intermediate granulate (5) by heating the intermediate granulate (5) in a molding cavity of a molding tool (18) to a temperature greater than the glass transition temperature of the thermoplastic material, and by subsequently solidifying the thermoplastic material by means of cooling.

2. The method according to claim 1, **characterized in that** foam material objects made from the thermoplastic material are crushed to provide the starting granulate (1).

3. The method according to claim 2, **characterized in that** foam material objects with different densities are crushed.

4. The method according to one of the preceding claims, **characterized in that** by means of heat treatment, a bulk density of the intermediate granulate (5) is increased fivefold to fortyfold with respect to the bulk density of the starting granulate (1) prior to the heat treatment.

5. The method according to one of the preceding claims, **characterized in that** by means of the heat treatment, a bulk density of the intermediate granulate (5) is set to a value selected from a range of 50 kg/m³ to 500 kg/m³.

6. The method according to one of the preceding claims, **characterized in that** the heat treatment is carried out at a temperature in the range of the glass transition temperature of the thermoplastic material.

7. The method according to claim 6, **characterized in that** the heat treatment is carried out at a temperature selected from a range of 90 °C to 120 °C.

8. The method according to one of the preceding claims, **characterized in that** the heat treatment is carried out at ambient pressure.

9. The method according to one of the preceding claims, **characterized in that** a duration for the heat treatment is selected from a range of 0.01 h to 50 h.

10. The method according to one of the preceding claims, **characterized in that** the intermediate granulate (5) is separated by density into multiple density fractions after the heat treatment.

11. The method according to claim 10, **characterized in that** for the subsequent molding of the foam material body, intermediate granulate of only one of the density fractions is used in each case.

12. The method according to one of the preceding claims, **characterized in that** at least one additive is mixed into the intermediate granulate prior to the molding of the foam material body.

13. The method according to one of the preceding claims, **characterized in that** prior to the molding of the foam material body, the intermediate granulate and at least one additional, constructive element are placed in the molding cavity of the molding tool, wherein the at least one constructive element becomes a part of the foam material body in the course of molding the foam material body.

14. The method according to one of the preceding claims, **characterized in that** for molding the foam material body (17), the intermediate granulate (5) is heated to a temperature selected from a range between 120 °C and 150 °C in the molding cavity (22).

15. The method according to one of the preceding claims, **characterized in that** for heating the intermediate granulate (5), steam is introduced into in the molding cavity (22) during molding.

16. The method according to one of the preceding claims, **characterized in that** a mechanical stress selected from a range between 0.01 N/mm² and 2 N/mm² is applied to the intermediate granulate (5) during molding in the molding cavity (19).

17. The method according to one of the preceding claims, **characterized in that** at the end of the molding of the foam material body (17), prior to the solidification of the plastic material by cooling, a pressure in the molding cavity (19) is lowered to ambient pressure.

18. The method according to claim 17, **characterized in that** a vacuum is generated in the molding cavity (19) prior to the solidification of the plastic material by cooling.

## Revendications

1. Procédé permettant de fabriquer un corps en mousse (17), comprenant les étapes suivantes :
- fourniture d'un granulat de départ (1) pouvant être versé, à partir de particules expansées d'une matière thermoplastique,
- fourniture d'un granulat intermédiaire (5) pouvant être versé, ayant une densité apparente plus élevée que celle du granulat de départ (1), par la réduction de volume des particules du granulat de départ (1), par le fait que le granulat de départ (1) est soumis à un traitement thermique ne provoquant pas de fusion, et
- ensuite formage du corps en mousse (17) par raccordement, par liaison de matière, des particules réduites en volume du granulat intermédiaire (5) par le fait que le granulat intermédiaire (5) est, dans un espace de formage d'un outil de formage (18), chauffé à une température supérieure à une température de transition vitreuse de la matière thermoplastique, et puis la matière thermoplastique est solidifiée par refroidissement.

2. Procédé selon la revendication 1, **caractérisé en ce que**, pour la fourniture du granulat de départ (1), des objets en mousse composés de la matière thermoplastique sont broyées.

3. Procédé selon la revendication 2, **caractérisé en ce que** des objets en mousse de différentes épaisseurs sont broyés.

4. Procédé selon l'une des revendications précédentes, **caractérisé en ce que**, par le traitement thermique, une densité en vrac du granulat intermédiaire (5) - rapportée à une densité en vrac du granulat de départ (1) avant le traitement thermique - est augmentée de 5 à 40 fois.

5. Procédé selon l'une des revendications précédentes, **caractérisé en ce que**, par le traitement thermique, une densité en vrac du granulat intermédiaire (5) est réglée à une valeur dans une plage de 50 kg/m³ à 500 kg/m³.

6. Procédé selon l'une des revendications précédentes, **caractérisé en ce que** le traitement thermique est effectué à une température dans la plage de la température de transition vitreuse de la matière thermoplastique.

7. Procédé selon la revendication 6, **caractérisé en ce que** le traitement thermique est effectué à une température sélectionnée dans une plage de 90 °C à 120°C.

8. Procédé selon l'une des revendications précédentes, **caractérisé en ce que** le traitement thermique est effectué à la pression ambiante.

9. Procédé selon l'une des revendications précédentes, **caractérisé en ce qu'**une durée du traitement thermique est sélectionnée dans une plage de 0,01 h à 50 h.

10. Procédé selon l'une des revendications précédentes, **caractérisé en ce que** le granulat intermédiaire (5) est, après le traitement thermique, réparti en plusieurs fractions de densité par séparation selon la densité.

11. Procédé selon la revendication 10, **caractérisé en ce que**, pour le formage ultérieur du corps en mousse, respectivement seul du granulat intermédiaire d'une des fractions de densité est utilisé.

12. Procédé selon l'une des revendications précédentes, **caractérisé en ce que**, avant le formage du corps en mousse, au moins un additif est mélangé au granulat intermédiaire.

13. Procédé selon l'une des revendications précédentes, **caractérisé en ce que**, avant le formage du corps en mousse, le granulat intermédiaire et au moins un élément de construction supplémentaire sont introduits dans l'espace de formage de l'outil de formage, l'au moins un élément de construction devenant un élément constitutif du corps en mousse au cours du formage du corps en mousse.

14. Procédé selon l'une des revendications précédentes, **caractérisé en ce que**, pour le formage du corps en mousse (17), le granulat intermédiaire (5) est chauffé dans l'espace de formage (22) à une température sélectionnée dans une plage de 120 °C à 150 °C.

15. Procédé selon l'une des revendications précédentes, **caractérisé en ce que**, pour le chauffage du granulat intermédiaire (5), de la vapeur d'eau est introduite dans l'espace de formage (22) pendant le formage.

16. Procédé selon l'une des revendications précédentes, **caractérisé en ce que**, pendant le formage, le granulat intermédiaire (5) est soumis dans l'espace de formage (19), à une tension mécanique sélectionnée dans une plage de 0,01 N/mm² à 2 N/mm².

17. Procédé selon l'une des revendications précédentes, **caractérisé en ce que**, à la fin du formage du corps en mousse (17), une pression dans l'espace de formage (19) est abaissée à la pression ambiante avant la solidification de la matière plastique par refroidissement.

18. Procédé selon la revendication 17, **caractérisé en ce que**, avant la solidification de la matière plastique par refroidissement, une dépression est produite dans l'espace de formage (19).
